# EUROPÄISCHE PATENTSCHRIFT

(11) **EP 1 419 911 B1**
(45) Veröffentlichungstag und Bekanntmachung des Hinweises auf die Patenterteilung: **09.04.2008**
(21) Anmeldenummer: 03024311.7
(22) Anmeldetag: 24.10.2003
(51) Int. Cl.: B60G 17/015, B60G 17/04

(54) **Luftfederungsanlage und Wankabstützung und Niveauregelung eines Kraftfahrzeugs**
Air spring installation and device for roll stabilization and level control system for vehicles
Dispositif de ressort pneumatique et de stabilisation anti-roulis et système de contrôle d'assiette pour véhicules

(30) Priorität: 15.11.2002 DE 10253243
(43) Veröffentlichungstag der Anmeldung: 19.05.2004
(73) Patentinhaber: AUDI AG, 85045 Ingolstadt (DE)
(72) Erfinder: Schmidt, Walter, 86643 Rennertshofen (DE)
(74) Vertreter: Asch, Konrad

(56) Entgegenhaltungen:
- DE-A- 10 045 413
- GB-A- 2 270 049
- US-A- 3 008 729
- US-A- 5 785 344

## Beschreibung

Die Erfindung betrifft eine Luftfederungsanlage zur Nickabstützung und/oder Wankabstützung und/oder Niveauregelung eines Kraftfahrzeugs nach dem Oberbegriff des Anspruchs 1.

Bei einer bekannten Luftfederungsanlage (DE 100 09 392 A1) zur Nick- und Wankabstützung und zur Niveaueinstellung eines Kraftfahrzeugs sind den einzelnen Rädern Luftfedern zugeordnet, die diese abstützen, wobei deren Luftkammervolumina gesteuert verstellbar sind. Hier ist jedem Rad eine unabhängig von den anderen Luftfedern einzeln steuerbare Luftfeder zugeordnet, die einerseits an einem Achslenker und andererseits etwa vertikal darüber an der Fahrzeugstruktur angeschlossen ist, so dass jede dieser Luftfedern für das zugeordnete Rad unmittelbar Tragfunktion hat. Zudem sind an jede Luftkammer der Luftfedern jeweils mechanisch gesteuert verstellbare Ausgleichsluftfedern und Kompensationsluftfedern strömungsmäßig angeschlossen. Die Volumina der Ausgleichsluftfedern sind daher lediglich örtlich getrennte Luftvolumina der Luftkammern der Luftfedern und diesen unmittelbar und in ihrer Funktion zuzurechnen. Die gesteuerte Verstellung der Volumengrößen erfolgt hier in den Ausgleichsluftfedern. Eine Volumenverkleinerung in der Ausgleichsluftfeder bewirkt eine Druckerhöhung in der zugeordneten Luftkammer der Luftfeder. Wenn über Sensoren eine Nick- oder Wankeinfederung am zugeordneten Rad ermittelt wird, kann durch entsprechende Ansteuerung für eine Druckerhöhung und Erhöhung der Federsteifigkeit zur Stabilisierung des Fahrzeugs solchen Einfederbewegungen entgegengewirkt werden. Entsprechend kann bei sensierten Ausfederungen der Luftdruck in der Luftfeder durch Vergrößerung des Luftvolumens der Ausgleichskammer verkleinert und Ausfederbewegungen entgegengewirkt werden. Bei einer gemeinsamen Druckerhöhung oder Druckreduzierung in allen Luftfedern kann das Fahrzeugniveau angehoben oder abgesenkt werden.

Die Verstellung der Volumengröße in einer Ausgleichsluftfeder erfolgt durch einen verstellbaren Tauchkolben, der je nach Stellposition unterschiedlich weit in die Luftkammer der zugeordneten Ausgleichsluftfeder einragt. Für eine möglichst kraftfreie Verstellung ist jeder Ausgleichsluftfeder eine Kompensationsluftfeder zugeordnet, wobei der Tauchkolben als doppelt wirkender Kolben ausgebildet ist, der mit einem Kolbenteil in die Ausgleichsluftfeder und mit dem anderen Kolbenteil in die Kompensationsluftfeder einragt. Bei einer Verstellung des Tauchkolbens beispielsweise für eine Volumenverkleinerung in der Ausgleichsluftfeder erfolgt somit eine Volumenvergrößerung in der Kompensationsluftfeder.

Damit ergibt sich eine sehr aufwendige Luftfederungsanlage mit einer Vielzahl von komplizierten Bauteilen, die zudem erheblichen Bauraum beanspruchen. Beispielsweise sind bei einem Fahrzeug mit vier Rädern vier Luftfedereinheiten erforderlich mit der jeweils tragenden Luftfeder und nachgeordneten Ausgleichsluftfedern und Kompensationsluftfedern, welche jeweils separat während des Fahrbetriebs anzusteuern sind.

Weiter ist eine gattungsgemäße Luftfederungsanlage zur Nickabstützung und/oder Wankabstützung und/oder Niveauregelung eines Kraftfahrzeugs bekannt (US-A-3 008 729), bei der eine Luftfedereinheit aus einer ersten Luftfeder und einer zweiten Luftfeder durch ein gemeinsames Luftfeder-Zylindergehäuse und einen darin dicht und gesteuert verschiebbaren, doppeltwirkenden Kolben gebildet ist, wobei beidseitig des Kolbens eine der ersten Luftfeder zugeordnete zweite Luftkammer gebildet ist, deren Volumina bei einer gesteuerten Kolbenverstellung gekoppelt verstellbar sind. Für die beiden Luftkammern ist jeweils eine Strömungsverbindung zu einem volumenveränderlichen Tragelement eines zugeordneten Rades herstellbar, so dass zwei an die Luftfedereinheit angeschlossene, jeweils einem Rad zugeordnete Tragelemente gekoppelt abstützbar und gekoppelt steuerbar sind. Die Tragelemente sind hier als großvolumige Luftkammerelemente mit veränderlichem Volumen ausgebildet. Für eine solche Ausführung und Anordnung liegt insbesondere bei Personenkraftfahrzeugen entweder der erforderliche Einbauraum nicht vor oder der gestalterische Freiraum ist zumindest stark eingeschränkt. Zudem ist das Ansprechverhalten bei Ansteuerungen träge und die Genauigkeit der Druckübertragung verbesserungsfähig.

Aufgabe der Erfindung ist es daher eine gattungsgemäße Luftfederungsanlage so weiterzubilden, dass bei einem einfachen, kostengünstigen Aufbau mit reduziertem Bauvolumen eine gut funktionsfähige Nick- und Wankabstützung sowie Niveauregelung erreichbar ist.

Diese Aufgabe wird mit den Merkmalen des Anspruchs 1 gelöst.

Gemäß Anspruch 1 ist ein erstes, der ersten Luftfeder zugeordnetes Fahrzeugrad über eine erste, ein Zylindervolumen aufweisende, Zylinder-Kolben-Einheit als Tragelement am Fahrzeugaufbau abgestützt. Entsprechend ist ein zweites, der zweiten Luftfeder zugeordnetes Fahrzeugrad über eine zweite, ein Zylindervolumen aufweisende Zylinder-Kolben-Einheit als Tragelement am Fahrzeugbau abgestützt. Im Luftfeder-Zylindergehäuse sind jeweils gegenüberiiegend zum Kolben zur Ausbildung einer ersten und zweiten Hydraulikkammer eine erste Elastomermembran als Luftkammerwand der ersten Luftkammer und eine zweite Elastomermembran als Luftkammerwand der zweiten Luftkammer dicht angeordnet, wobei eine Hydraulikflüssigkeit als Arbeitsmittel verwendet ist, die sich in den Zylindervolumen der ersten und zweiten Zylinder-Kolben-Einheiten in der ersten und zweiten Hydraulikkammer, sowie in den die jeweils zugeordneten Zylindervolumen und Hydraulikkammern verbindenden ersten und zweiten Arbeitsmittelleitungen befindet.

Der Anordnung liegt die Überlegung zugrunde, dass beim Anschluss der Tragelemente zweier Räder einer Achse eine wirksame Wankabstützung dergestalt durchführbar ist, indem am einfedernden Rad eine Druckerhöhung und am gegenüberliegenden ausfedernden Rad eine Druckverminderung durchgeführt wird, so dass diese Maßnahmen vorteilhaft über einen doppelt wirkenden Kolben in einem gemeinsamen Luftfeder-Zylindergehäuse mit einer relativ geringen Anzahl von Stell- und Steuermitteln koppelbar sind. Unter einem gemeinsamen Luftfeder-Zylindergehäuse wird ein über seine Länge durchgehendes Gehäuse, gegebenenfalls mit Anschluss- und Stellöffnungen im mittleren Bereich des Kolbens verstanden. Ebenso kann das gemeinsame Gehäuse zweiteilig aus zwei Zylinderteilen gebildet sein, die ortsfest zueinander auf einem gemeinsamen Trägerteil festgelegt sind.

Vorteilhaft wird erfindungsgemäß zudem als Arbeitsmittel eine vor einer Luftkammer angeordnete Hydraulikflüssigkeit verwendet, welche durch eine Elastomermembran jeweils von der zugeordneten Luftkammer getrennt und mit dem Zylindervolumen einer Zylinder-Kolben-Einheit verbunden ist. Durch diese Vorlage einer Hydraulikflüssigkeit vor der zugeordneten Luftkammer wird eine genaue Druckübertragung mit schneller Ansprechzeit gewährleistet. Durch den Einsatz von Zylinder-Kolben-Einheiten ergibt sich insgesamt ein einfacher, raumsparender Aufbau. Zudem kann einfach eine Schwingungsdämpfung realisiert werden. Gemäß Anspruch 2 können dazu Dämpfungsmaßnahmen in den Zylinder-Kolben-Einheiten und/oder in den Hydraulikleitungen, insbesondere mittels fester oder steuerbarer Strömungsdrosseln integriert sein.

Die beschriebene Wankabstützung ist gemäß Anspruch 3 erreichbar, indem der doppelt wirkende Kolben mittels eines Verschiebe-Stellglieds insgesamt im Luftfeder-Zylindergehäuse gesteuert verschoben wird, so dass entsprechend einem Verschiebestellweg das Volumen der einen Luftkammer verkleinert und gekoppelt das Volumen der anderen Luftkammer vergrößert wird. Grundsätzlich wäre es auch möglich, jeweils ein Tragelement eines Rades der Vorderachse und eines Rades der Hinterachse anzuschließen, um bei Rädern auf der gleichen Fahrzeugseite eine Nickabstützung zu steuern. Bevorzugt werden jedoch jeweils die beiden Räder einer Achse an jeweils eine Luftfedereinheit angeschlossen.

Gemäß Anspruch 4 wird vorgeschlagen den Kolben als Doppelkolben auszubilden mit einem der ersten Luftkammer zugeordneten ersten Kolbenelement und einem der zweiten Luftkammer zugeordneten zweiten Kolbenelement. Die beiden Kolbenelemente sind über ein dazwischen angeordnetes Relativlagen-Stellglied verbunden und in ihrer Relativlage zueinander gesteuert verstellbar, d. h. auseinander- oder zusammenbewegbar. Damit sind entsprechend einem bestimmten Relativlagen-Stellweg die Volumina beider Luftkammern gekoppelt gemeinsam verkleinerbar oder vergrößerbar. Bei einer solchen Ansteuerung wird die Federwirkung für beide angeschlossenen Räder in der gleichen Richtung zu einer härteren oder weicheren Federwirkung beeinflusst. Beim Anschluss der Tragelemente zweier Räder der jeweils gleichen Achse an eine Luftfedereinheit kann damit eine wirksame Nickabstützung durchgeführt werden, wenn beispielsweise bei einem Bremsvorgang mit einer Nickeinfederung an der Vorderachse dort die Federwirkung in Richtung einer härteren Federabstützung und gegebenenfalls entsprechend umgekehrt mit einer Luftfedereinheit an der Hinterachse zu einer weicheren Federwirkung gesteuert wird. Dazu sind die Kolbenelemente der vorderen Luftfedereinheit gesteuert auseinander zu bewegen. Gegebenenfalls kann zur Unterstützung der Nickabstützung die Federwirkung an der Hinterachse durch eine gesteuerte Zusammenbewegung der Kolbenelemente der hinteren Luftfedereinheit weicher gestaltet werden.

In einer besonders bevorzugten Ausführungsform gemäß Anspruch 5 ist sowohl ein Verschiebe-Stellglied für eine Insgesamtverschiebung des Doppelkolbens vorgesehen und mit einem Relativlagenstellglied Kolbens kombiniert. Damit sind beide vorbeschriebenen Beeinflussungen in ihrer Kombination möglich, so dass bei entsprechend angepasster Steuerung eine besonders wirksame Nick- und Wankabstützung möglich ist. Zudem können die Abstützkräfte in allen Luftfedern gemeinsam angehoben oder abgesenkt werden, so dass durch die Kolbensteuerung mit den Relativlagenstellgliedern in einem durch den Stellweg vorgegebenen Bereich auch eine Niveaueinstellung möglich ist.

Als Verschiebestellglieder und/oder Relativlagen-Stellglieder können je nach den konkreten Gegebenheiten an sich bekannte Stellglieder, wie beispielsweise Spindelstellelemente, Zahnstangenstellelemente in Verbindung mit Elektromotoren und/oder Hydraulik- oder Pneumatikantrieben sowie ggf. Magnetspulenantriebe verwendet werden. Zweckmäßig werden die Stellelemente und Antriebe an der Außenwand des Luftfeder-Zylindergehäuses im Bereich des Kolbens mit einer Stellverbindung dazu angeordnet.

Nach den Merkmalen des Anspruchs 6 sind die beiden Luftkammern einer Luftfedereinheit über je ein gesteuert betätigbares Kompressor-Absperrventil mit dem Ausgang eines Kompressors verbunden. Damit ist der Grundluftdruck in den Luftkammern einstellbar und gegebenenfalls für eine Niveauverstellung regulierbar.

Nach Anspruch 7 ist jeweils zu den Luftkammern ein Zusatzluftvolumen gesteuert zuschaltbar, wodurch eine Grundeinstellung der Luftkammern von einer größeren Härte, beispielsweise für einen sportlichen Fahrbetrieb, zu einer geringeren Härte umschaltbar ist.

Eine Anordnung mit gut beherrschbarer Steuerfunktion wird mit Anspruch 8 beansprucht, wobei eine Luftfedereinheit den beiden Rädern einer Achse und jeweils eine Luftfedereinheit jeder Achse zugeordnet ist.

Anhand einer Zeichnung wird die Erfindung näher erläutert.

Es zeigen:

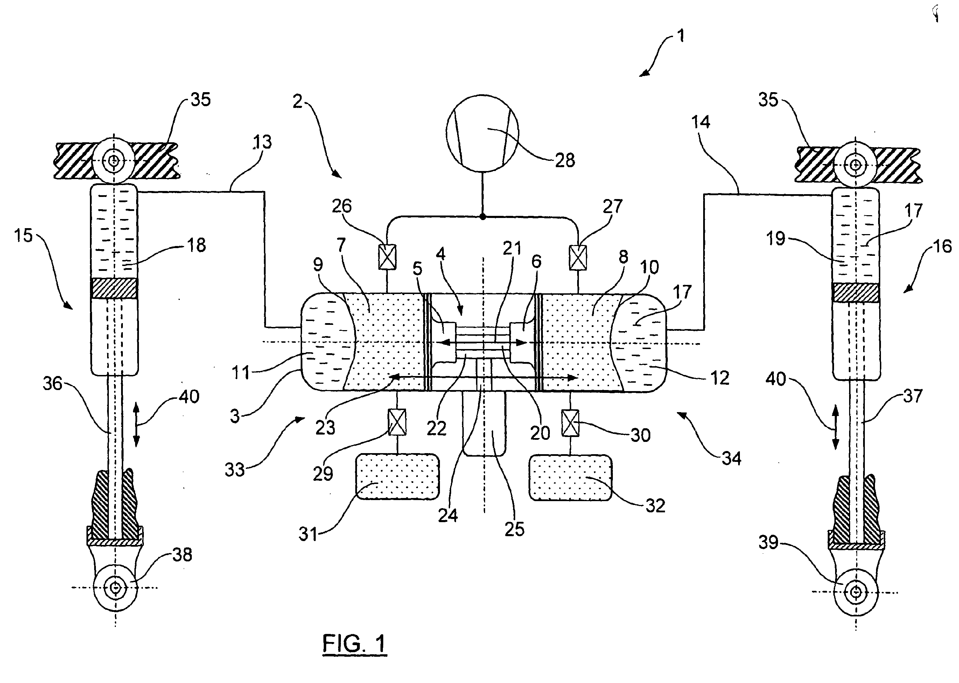

- Fig. 1: eine schematische Darstellung einer Luftfederungsanlage mit einer Luftfedereinheit und zwei dieser zugeordneten Tragelementen.

In der einzigen Figur ist schematisch eine Luftfederungsanlage 1 mit einer Luftfedereinheit 2 dargestellt. In einem Luftfeder-Zylindergehäuse 3 der Luftfedereinheit 2 ist zentral ein Doppelkolben 4 angeordnet, der im Luftfeder-Zylindergehäuse 3 dicht aufgenommen und gesteuert verschiebbar ist. Der Doppelkolben 4 umfasst ein erstes Kolbenelement 5 und ein zweites Kolbenelement 6, dem jeweils eine erste Luftkammer 7 und eine zweite Luftkammer 8 zugeordnet ist. Jeweils gegenüberliegend zum Kolbenelement 5 bzw. 6 sind eine erste Elastomermembran 9 als Luftkammerwand der ersten Luftkammer 7 und eine zweite Elastomermembran 10 als Luftkammerwand der zweiten Luftkammer 8 dicht angeordnet. Den beiden Elastomermembranen 9 und 10 ist eine erste Hydraulikkammer 11 und eine zweite Hydraulikkammer 12 vorgeschalten, wobei von den beiden Hydraulikkammern 11 und 12 jeweils eine erste und zweite Arbeitsmittelleitung 13 und 14 zu jeweils einer ersten und zweiten Zylinder-Kolben-Einheit 15 und 16 strömungsdicht geführt sind. Als Arbeitsmittel ist eine Hydraulikflüssigkeit 17 verwendet, die sich in den Zylindervolumen 18 und 19 der ersten und zweiten Zylinder-Kolben-Einheiten 15 und 16, der ersten und zweiten Arbeitsmittelleitung 13 und 14 und der ersten und zweiten Hydraulikkammern 11 und 12 befindet. Die Hydraulikflüssigkeit 17 ist strichliert in den Zylindervolumen 18 und 19 bzw. in den Hydraulikkammern 11 und 12 eingezeichnet.

Der Doppelkolben 4 ist mittels eines Verschiebe-Stellglieds 20 insgesamt im Luftfeder-Zylindergehäuse 3 gesteuert verschiebbar, so dass entsprechend einem Verschiebe-Stellweg 21 das Volumen einer Luftkammer 7 oder 8 verkleinerbar und entsprechend gekoppelt das Volumen der anderen Luftkammer 8 oder 7 vergrößerbar ist. Zudem ist der Doppelkolben 4 mit einem Relativlagen-Stellglied 22 verbunden für eine gesteuerte Verstellung der beiden Kolbenelemente 5 und 6 in ihrer Relativlage zueinander. Somit sind entsprechend einem Relativlagen-Stellweg 23 die Volumina beider Luftkammern 7 und 8 gekoppelt verkleinerbar oder vergrößerbar. Das Verschiebe-Stellglied 20 und das Relativlagen-Stellglied 22 des Doppelkolbens 4 sind miteinander kombiniert zwischen dem ersten und zweiten Kolbenelement 5 und 6 angeordnet und mittels einer Stellverbindung 24 mit einem an der Außenwand des Luftfeder-Zylindergehäuses 3 angeordneten Stellantrieb 25 verbunden.

Die beiden Luftkammern 7 und 8 sind jeweils über ein gesteuert betätigbares Kompressor-Absperrventil 26 und 27 mit dem Ausgang eines Kompressors 28 strömungsverbunden. Zudem sind an beiden Luftkammern 7 und 8 jeweils über ein gesteuert betätigbares Zusatzvolumen-Absperrventil 29 und 30 jeweils eine Zusatzluft-Kammer 31 und 32 strömungsmäßig verbunden, wobei die beiden Zusatzluft-Kammern 31 und 32 ein gleiches Zusatzvolumen beinhalten.

Somit besteht die Luftfedereinheit 2 aus einer ersten Luftfeder 33 und einer zweiten Luftfeder 34, die durch das gemeinsame Luftfeder-Zylindergehäuse 3 und den darin angeordneten Doppelkolben 4 mit jeweils zugeordneter erster und zweiter Luftkammer 7 und 8, deren Volumina bei einer gesteuerten Kolbenverstellung der Kolbenelemente 5 und 6 gekoppelt verstellbar sind, gebildet ist. Ein erstes, der ersten Luftfeder 33 zugeordnetes Fahrzeugrad (nicht dargestellt) ist über die erste Zylinder-Kolben-Einheit 15 als Tragelement am Fahrzeugaufbau 35 abgestützt. Dementsprechend ist ein zweites, der zweiten Luftfeder 34 zugeordnetes Fahrzeugrad (nicht dargestellt) über die zweite Zylinder-Kolben-Einheit 16 als Tragelement am Fahrzeugaufbau 35 abgestützt. An den jeweiligen Kolbenstangen 36 und 37 der beiden Zylinder-Kolben-Einheiten 15 und 16 sind jeweils nur die Anbindungspunkte 38 und 39 an die Achslenker der jeweils zugeordneten Fahrzeugräder dargestellt. Die in Zusammenhang mit der Luftfederungsanlage 1 mögliche Bewegung der Fahrzeugräder, die durch die Luftfedern 33 und 34 abgestützt sind, ist mit den Pfeilen 40 eingezeichnet.

Die Luftfedereinheit 2 ist den beiden Rädern einer Fahrzeugachse zugeordnet, so dass eine wirksame Wankabstützung dergestalt durchführbar ist, dass am einfedernden Rad durch eine Druckerhöhung und am gegenüberliegenden ausfedernden Rad eine Druckverminderung durchgeführt wird. Dazu wird der Doppelkolben 4 in Richtung der Luftfeder 33 oder 34, in der eine Druckerhöhung erfolgen muss, mittels dem Verschiebe-Stellglied 20 komplett im Luftfeder-Zylindergehäuse 3 verschoben. Somit wird das Volumen der einen Luftkammer 7 oder 8 verkleinert und gekoppelt das Volumen der anderen Luftkammer 8 oder 7 vergrößert. Für eine wirksame Nickabstützung werden die Kolbenelemente 5 und 6 des Doppelkolbens 4 gesteuert auseinander bewegt, so dass die Volumina der beiden Luftkammern 7 und 8 verkleinert werden und somit eine härtere Federabstützung erfolgt. Zudem können ggf. an einer zweiten Luftfedereinheit, die an der zweiten Fahrzeugachse angeordnet ist, durch ein gesteuertes aufeinander zu bewegen der Kolbenelemente des Doppelkolbens die Volumina der beiden Luftkammern dadurch vergrößert werden, so dass dadurch eine weichere Federabstützung erfolgt.

Mittels dem Kompressor 28 ist der Grundluftdruck in den Luftkammern 7 und 8 einstellbar, so dass mittels der Kompressor-Absperrventile 26 und 27 eine Niveauverstellung durchführbar ist. Durch ein Zuschalten der Zusatzluft-Kammern 31 und 32 zu den jeweiligen Luftkammern 7 und 8 mittels der Zusatzvolumen-Absperrventile 29 und 30 ist insgesamt die Härte der Luftfederungsanlage 1 von einem größeren Wert zu einem geringeren Wert umschaltbar.

## Patentansprüche

1. Luftfederungsanlage zur Nickabstützung und/oder Wankabstützung und/oder Niveauregelung eines Kraftfahrzeugs mit den einzelnen Rädern zugeordneten und diese abstützenden Luftfedern mit Luftkammern, deren jeweiliges Volumen gesteuert verstellbar ist, wobei
- eine Luftfedereinheit (2) aus einer ersten Luftfeder (33) und einer zweiten Luftfeder (34) durch ein gemeinsames Luftfeder-Zylindergehäuse (3) und einen darin dicht und gesteuert verschiebbaren, doppeltwirkenden Kolben (4) gebildet ist, wobei beidseitig des Kolbens (4) eine der ersten Luftfeder (33) zugeordnete erste Luftkammer (7) und eine der zweiten Luftfeder (34) zugeordnete zweite Luftkammer (8) gebildet ist, deren Volumina bei einer gesteuerten Kolbenverstellung gekoppelt verstellbar sind, und
- für die beiden Luftkammern (7, 8) jeweils eine Strömungsverbindung (13, 14) zu einem volumenveränderlichen Tragelement (15, 16) eines zugeordneten Rades (38, 39) herstellbar ist, so dass zwei an die Luftfedereinheit (2) angeschlossene, jeweils einem Rad (38, 39) zugeordnete Tragelemente (15, 16) gekoppelt abstützbar und gekoppelt steuerbar sind,
**dadurch gekennzeichnet,**
- **dass** ein erstes, der ersten Luftfeder (33) zugeordnetes Fahrzeugrad (38) über eine erste, ein Zylindervolumen (18) aufweisende Zylinder-Kolben-Einheit (15) als Tragelement am Fahrzeugaufbau (35) abgestützt ist und entsprechend ein zweites, der zweiten Luftfeder (34) zugeordnetes Fahrzeugrad (39) über eine zweite, ein Zylindervolumen (19) aufweisende Zylinder-Kolben-Einheit (16) als Tragelement am Fahrzeugaufbau (35) abgestützt ist,
- **dass** im Luftfeder-Zylindergehäuse (3) jeweils gegenüberliegend zum Kolben (4) zur Ausbildung einer ersten und zweiten Hydraulikkammer (11, 12) eine erste Elastomermembran (9) als Luftkammerwand der ersten Luftkammer (7) und eine zweite Elastomermembran (10) als Luftkammerwand der zweiten Luftkammer (8) dicht angeordnet sind, und
- **dass** eine Hydraulikflüssigkeit (17) als Arbeitsmittel verwendet ist, die sich in den Zylindervolumen (18, 19) der ersten und zweiten Zylinder-Kolben-Einheiten (15, 16), in der ersten und zweiten Hydraulikkammer (11, 12), sowie in den die jeweils die zugeordneten Zylindervolumen (18, 19) und Hydraulikkammern (11, 12) verbindenden ersten und zweiten Arbeitsmittelleitungen (13, 14) befindet.

2. Luftfederungsanlage nach Anspruch 1, **dadurch gekennzeichnet, dass** in den Zylinder-Kolben-Einheiten (15, 16) und/oder in den Hydraulikleitungen (13, 14) Strömungsdrosseln, gegebenenfalls steuerbare Strömungsdrosseln für eine Dämpfung vorgesehen sind.

3. Luftfederungsanlage nach Anspruch 1 oder 2, **dadurch gekennzeichnet, dass** der Kolben (4) mittels eines Verschiebe-Stellglieds (20) insgesamt im Luftfeder-Zylindergehäuse (3) gesteuert verschiebar ist, so dass entsprechend einem Verschiebe-Stellweg (21) das Volumen einer Luftkammer (7, 8) verkleinerbar und entsprechend gekoppelt das Volumen der anderen Luftkammer (7, 8) vergrößerbar ist.

4. Luftfederungsanlage nach einem der Ansprüche 1 bis 3, **dadurch gekennzeichnet, dass** der Kolben ein Doppelkolben (4) ist mit einem der ersten Luftkammer (7) zugeordneten ersten Kolbenelement (5) und einem der zweiten Luftkammer (8) zugeordneten zweiten Kolbenelement (5), die über ein dazwischen angeordnetes Relativlagen-Stellglied (22) verbunden in ihrer Relativlage zueinander gesteuert verstellbar sind, so dass entsprechend einem Relativlagen-Stellweg (23) die Volumina beider Luftkammern (7, 8) gekoppelt verkleinerbar oder vergrößerbar sind.

5. Luftfederungsanlage nach einem der Ansprüche 1 bis 4, **dadurch gekennzeichnet, dass** eine Luftfedereinheit (2) einen Doppelkolben (4) mit einem Verschiebe-Stellglied (20) und einem Relativlagen-Stellglied (22) aufweist.

6. Luftfederungsanlage nach einem der Ansprüche 1 bis 5, **dadurch gekennzeichnet, dass** die beiden Luftkammern (7, 8) einer Luftfedereinheit (2) jeweils über ein gesteuert betätigbares Kompressor-Absperrventil (26, 27) mit dem Ausgang eines Kompressors (28) verbunden sind.

7. Luftfederungsanlage nach einem der Ansprüche 1 bis 6, **dadurch gekennzeichnet, dass** jede der Luftkammern (7, 8) jeweils über ein gesteuert betätigbares Zusatzvolumen-Absperrventil (29, 30) mit einer zugeordneten Zusatzluft-Kammer (31, 32) mit bevorzugt gleichem Zusatzvolumen strömungsmäßig verbunden ist.

8. Luftfederungsanlage nach einem der Ansprüche 1 bis 7, **dadurch gekennzeichnet,**
**dass** ein erstes, der ersten Luftfeder (33) zugeordnetes Fahrzeugrad (38) über eine erste Zylinder-Kolben-Einheit (15) als Tragelement am Fahrzeugaufbau (35) abgestützt ist und ein Zylindervolumen (18) der ersten Zylinder-Kolben-Einheit (15) unmittelbar oder mittelbar über eine erste Arbeitsmittelleitung (13) mit der ersten Luftkammer (7) verbunden ist, und
**dass** ein zweites, der zweiten Luftfeder (34) zugeordnetes Fahrzeugrad (39) über eine zweite Zylinder-Kolben-Einheit (16) als Tragelement am Fahrzeugaufbau (35) abgestützt ist und ein Zylindervolumen (19) der zweiten Zylinder-Kolben-Einheit (16) unmittelbar oder mittelbar über eine zweite Arbeitsmittelleitung (14) mit der zweiten Luftkammer (8) verbunden ist.

## Claims

1. Air spring installation for pitch and/or roll stabilisation and/or level control of a motor vehicle, with air springs which are associated with the individual wheels and support the latter, and which have air chambers the respective volumes of which are adjustable in a controlled manner,
- an air spring unit (2) being formed from a first air spring (33) and a second air spring (34) by a common air spring cylinder housing (3) and a double-acting piston (4) displaceable in a sealed and controlled manner therein, a first air chamber (7) associated with the first air spring (33) and a second air chamber (8) associated with the second air spring (34) being formed on each side of the piston (4), the volumes of which air chambers (7, 8) are adjustable in a coupled manner by a controlled displacement of the piston (4), and
- a flow connection being able to be established, for the two air chambers (7, 8), to a volume-variable support element (15, 16) of a respective associated wheel (38, 39), so that two support elements (15, 16) connected to the air spring unit (2) and associated with respective wheels (38, 39) are able to be both supported and controlled in a coupled manner,
**characterised in that**
- a first vehicle wheel (38) associated with the first air spring (33) is supported from the vehicle body (35) via a first cylinder-piston unit (15) having a cylinder volume (18), as a support element, and correspondingly a second vehicle wheel (39) associated with the second air spring (34) is supported from the vehicle body (35) via a second cylinder-piston unit (16) having a cylinder volume (19), as a support element,
- a first elastomer membrane (9) as an air chamber wall of the first air chamber (7), and a second elastomer membrane (10) as an air chamber wall of the second air chamber (8), are arranged in a sealed manner in the air spring cylinder housing (3), in each case opposite the piston (4), for forming a first and second hydraulic chamber (11, 12), and
- a hydraulic fluid (17) is used as a working medium, which hydraulic fluid (17) is contained in the cylinder volumes (18, 19) of the first and second cylinder-piston units (15, 16), in the first and second hydraulic chambers (11, 12) and in the first and second working medium lines (13, 14) connecting the respective associated cylinder volumes (18, 19) and hydraulic chambers (11, 12).

2. Air spring installation according to Claim 1, **characterised in that** flow throttles, optionally controllable flow throttles, for a damping system are provided in the cylinder-piston units (15, 16) and/or in the hydraulic lines (13, 14).

3. Air spring installation according to Claim 1 or 2, **characterised in that** the piston (4) is displaceable as a whole in a controlled manner in the air spring cylinder housing (3) by means of a displacement actuator (20), so that the volume of one air chamber (7, 8) can be decreased and, in a corresponding, coupled manner, the volume of the other air chamber (7, 8) can be increased, according to an actuation displacement distance (21).

4. Air spring installation according to any one of Claims 1 to 3, **characterised in that** the piston is a double piston (4) with a first piston element (5) associated with the first air chamber (7) and a second piston element (5) associated with the second air chamber (8), which piston elements (5, 6) are adjustable in a connected and controlled manner in their positions relative to one another via a relative position actuator (22) arranged therebetween, so that the volumes of the two air chambers (7, 8) can be decreased or increased in a coupled manner according to a relative position actuation distance (23).

5. Air spring installation according to any one of Claims 1 to 4, **characterised in that** an air spring unit (2) has a double piston (4) with a displacement actuator (20) and a relative position actuator (22).

6. Air spring installation according to any one of Claims 1 to 5, **characterised in that** the two air chambers (7, 8) of an air spring unit (2) are each connected to the outlet of a compressor (28) via a respective compressor shut-off valve (26, 27) which is actuatable in a controlled manner.

7. Air spring installation according to any one of Claims 1 to 6, **characterised in that** each of the air chambers (7, 8) is connected flow-wise to a respective associated additional air chamber (31, 32) via a respective additional-volume shut-off valve (29, 30) which is actuatable in a controlled manner, which additional air chambers (31, 32) preferably have equal additional volumes.

8. Air spring installation according to any one of Claims 1 to 7, **characterised in that**
a first vehicle wheel (38) associated with the first air spring (33) is supported from the vehicle body (35) via a first cylinder-piston unit (15) as a support element, and a cylinder volume (18) of the first cylinder-piston unit (15) is connected directly or indirectly via a first working medium line (13) to the first air chamber (7), and
a second vehicle wheel (39) associated with the second air spring (34) is supported from the vehicle body (35) via a second cylinder-piston unit (16) as a support element, and a cylinder volume (19) of the second cylinder-piston unit (16) is connected directly or indirectly via a second working medium line (14) to the second air chamber (8).

## Revendications

1. Dispositif de suspension pneumatique d'anti-tangage et/ou d'anti-roulis et/ou de correction d'assiette d'un véhicule automobile comportant des ressorts pneumatiques associés à chaque roue et supportant ces dernières avec des chambres d'air, dont le volume respectif peut être réglé de manière commandée, dans lequel
- une unité de ressorts pneumatiques (2) composée d'un premier ressort pneumatique (33) et d'un deuxième ressort pneumatique (34) est formée par un boîtier cylindrique de ressorts pneumatiques (3) commun et un piston (4) à double action, mobile de manière commandée et étanche dans celui-ci, une première chambre d'air (7) associée au premier ressort pneumatique (33) et une deuxième chambre d'air (8) associée au deuxième ressort pneumatique (34), dont les volumes peuvent être réglés de manière couplée lors d'un réglage commandé des pistons, étant formées des deux côtés du piston (4), et
- respectivement une liaison d'écoulement (13, 14) vers un élément support (15, 16) à volume variable d'une roue associée (38, 39) peut être établie pour les deux chambres d'air (7, 8), de sorte que deux éléments supports (15, 16) associés respectivement à une roue (38, 39) et raccordés à l'unité de ressorts pneumatiques (2) peuvent être supportés de manière couplée et être commandés de manière couplée,
**caractérisée en ce**
- **qu'**une première roue de véhicule (38) associée au premier ressort pneumatique (33) est supportée comme élément support au niveau de la structure du véhicule (35) par le biais d'une première unité piston-cylindre (15) présentant un volume de cylindre (18) et de manière correspondante, une deuxième roue de véhicule (39) associée au deuxième ressort pneumatique (34) est supportée comme élément support au niveau de la structure du véhicule (35) par le biais d'une deuxième unité piston-cylindre (16) présentant un volume de cylindre (19),
- **qu'**une première membrane en élastomère (9) comme paroi de chambre d'air de la première chambre d'air (7) et une deuxième membrane en élastomère (10) comme paroi de chambre d'air de la deuxième chambre d'air (8) sont disposées de manière étanche dans le boîtier cylindrique de ressorts pneumatiques (3) respectivement en regard du piston (4) pour former une première et une deuxième chambre hydraulique (11, 12), et
- **qu'**un fluide hydraulique (17) est utilisé comme fluide de travail, qui se trouve dans les volumes de cylindre (18, 19) des première et deuxième unités piston-cylindre (15, 16), dans les première et deuxième chambres hydrauliques (11, 12) ainsi que dans les première et deuxième conduites de fluide de travail (13, 14) reliant respectivement les chambres hydrauliques (11, 12) et les volumes de cylindre (18, 19) associés.

2. Dispositif de suspension pneumatique selon la revendication 1, **caractérisé en ce que** des limiteurs de flux, le cas échéant des limiteurs de flux réglables, sont prévus dans les unités piston-cylindre (15, 16) et/ou dans les conduites hydrauliques (13, 14) pour un amortissement.

3. Dispositif de suspension pneumatique selon la revendication 1 ou 2, **caractérisé en ce que** le piston (4) peut être déplacé de manière commandée dans son ensemble dans le boîtier cylindrique de ressorts pneumatiques (3) au moyen d'un organe de réglage de déplacement (20), de sorte qu'en fonction d'un parcours de réglage de déplacement (21) le volume d'une chambre d'air (7, 8) peut être réduit et de manière couplée en conséquence le volume de l'autre chambre d'air (7, 8) peut être augmenté.

4. Dispositif de suspension pneumatique selon l'une quelconque des revendications 1 à 3, **caractérisé en ce que** le piston est un double piston (4) avec un premier élément de piston (5) associé à la première chambre d'air (7) et un deuxième élément de piston (5) associé à la deuxième chambre d'air (8), qui peuvent être réglés de manière commandée l'un par rapport à l'autre, reliés dans leur position relative par le biais d'un organe de réglage de position relative (22) disposé entre eux, de sorte que les volumes des deux chambres d'air (7, 8) peuvent être réduits ou augmentés de manière couplée en fonction d'un parcours de réglage de position relative (23).

5. Dispositif de suspension pneumatique selon l'une quelconque des revendications 1 à 4, **caractérisé en ce qu'**une unité de ressorts pneumatiques (2) présente un double piston (4) avec un organe de réglage de déplacement (20) et un organe de réglage de position relative (22).

6. Dispositif de suspension pneumatique selon l'une quelconque des revendications 1 à 5, **caractérisée en ce que** les deux chambres d'air (7, 8) d'une unité de ressorts pneumatiques (2) sont reliées avec la sortie d'un compresseur (28) respectivement par le biais d'une soupape d'arrêt de compresseur (26, 27) actionnable de manière commandée.

7. Dispositif de suspension pneumatique selon l'une quelconque des revendications 1 à 6, **caractérisée en ce que** chacune des chambres d'air (7, 8) est en communication fluidique avec une chambre d'air additionnel (31, 32) associée de préférence avec le même volume additionnel, respectivement par le biais d'une soupape d'arrêt de volume additionnel (29, 30) actionnable de manière commandée.

8. Dispositif de suspension pneumatique selon l'une quelconque des revendications 1 à 7, **caractérisée en ce**
**qu'**une première roue de véhicule (38) associée au premier ressort pneumatique (33) est supportée comme élément support au niveau de la structure du véhicule (35) par le biais d'une première unité piston-cylindre (15) et un volume de cylindre (18) de la première unité piston-cylindre (15) est relié directement ou indirectement avec la première chambre d'air (7) par le biais d'une première conduite de fluide de travail (13), et
**qu'**une deuxième roue de véhicule (39) associée au deuxième ressort pneumatique (34) est supportée comme élément support au niveau de la structure du véhicule (35) par le biais d'une deuxième unité piston-cylindre (16) et un volume de cylindre (19) de la deuxième unité piston-cylindre (16) est relié directement ou indirectement avec la deuxième chambre d'air (8) par le biais d'une deuxième conduite de fluide de travail (14).
